# DEMANDE DE BREVET EUROPEEN

(11) **EP 0 536 065 A1**
(43) Date de publication de la demande: **07.04.1993**
(21) Numéro de dépôt: 92420339.1
(22) Date de dépôt: 29.09.1992
(51) Int. Cl.: G01L 5/04, G01N 3/32

(54) **Dispositif pour analyser et mesurer les propriétés mécaniques, notamment les niveaux de tension, sur des structures souples tendues**

(30) Priorité: 01.10.1991 FR 9112285
(71) Demandeur: TISSAGE ET ENDUCTION Serge FERRARI S.A., F-38110 La Tour Du Pin (FR)
(72) Inventeur: Crosnier, Bernard, F-34820 Teyran (FR); Denaeyer, Gérard, Pavillon du Moulin, F-34000 Montpellier (FR)
(74) Mandataire: Laurent, Michel

(57) **Abrégé**

Dispositif (10) pour analyser et mesurer les propriétés mécaniques, notamment les niveaux de tension, sur des structures souples tendues, comprenant :
- une embase rigide (11) en forme d'anneau ;
- un pot vibrant (18), relié rigidement à l'embase rigide ;
- une tige de liaison rigide (21), reliée à une extrémité au pot vibrant (18) et à son autre extrémité à une ventouse (23) destinée à plaquer cette tige (21) contre la face de la structure souple (1) ;
- un capteur de force (33), monté sur la tige de liaison (21), destiné à mesurer la force dynamique émise par le pot (18) ;
- un capteur de déplacements (31) ;
- une unité de traitement et de calcul (36) , destinée :
. à recevoir les signaux (32,33) émis respectivement par le capteur de force et le capteur de déplacement (31) en fonction de la fréquence d'excitation ;
. à traiter ces deux signaux (32,33) ;
. à calculer le rapport complexe des deux signaux (32,33) en fonction de la fréquence de la vibration émise ;
. à afficher un résultat représentatif de la propriété mesurée.

## Description

L'invention concerne un dispositif pour analyser et mesurer les propriétés mécaniques, notamment les niveaux de tension, sur des structures souples tendues.

Si le plus généralement, dans la suite de la description, par "structure souple tendue ", on désigne un tissu enduit, tendu, pré-tendu ou autre, destiné à constituer un abri ou un velum ou analogue, tel que par exemple une structure gonflable.

Il va de soi que l'invention n'est nullement limitée aux seuls tissus enduits, mais peut également recevoir d'autres applications sur des films, des membranes, des bâches, des bannes ou analogues.

Comme on le sait, pour réaliser de telles structures, on applique en différents endroits des tensions, de manière à donner à cette structure la forme requise. Il importe donc de connaître avec précision les tensions et forces que l'on applique à cette structure, de manière à ce que celle-ci puisse satisfaire aux critères architecturaux de forme, mais également aux impératifs de résistance et rigidité.

Le plus généralement, on cherche à connaître avec précision, notamment dans le cas des tissus enduits, les tensions qui sont appliquées aussi bien dans le sens long (sens chaine) que dans le sens large (sens trame), voire parfois dans d'autres directions notamment diagonales.

A ce jour, ces tensions sont essentiellement appréciées de manière empirique, notamment à la main et en périphérie.

On a également cherché à apprécier les tensions que l'on applique aux drisses de fixation et que l'on réajuste ultérieurement si la toile se déforme. Cette disposition nécessite un bon ssavoir-faire, sinon on peut provoquer des ruptures partielles de la structure, telles que des déchirures prématurées ou des flottements.

Récemment, on a proposé un dispositif qui consiste à appliquer sur la structure tendue une force constante et à mesurer l'enfoncement de la structure lorsque cette force est appliquée.

Ce dispositif d'essai permanent permet seulement d'obtenir une raideur globale et non en sens chaîne ou en sens trame, et ne permet pas d'apprécier valablement la souplesse de l'ensemble ni d'accéder aux prétentions. En outre, on reproche à ce dispositif de détruire parfois les échantillons.

Enfin, les éléments de ce dispositif devant être situés de part et d'autre de la structure tendue, on ne peut avoir accès aux informations que de la périphérie de la structure, et il n'est pas possible de mesurer de telles propriétés au milieu de la structure.

L'invention pallie ces inconvénients. Elle vise un dispositif du type en question qui permette de mesurer et d'analyser les propriétés des structures souples tendues, notamment des toiles, bâches en tissu enduit utilisées dans la fabrication des abris, qui ne soit pas destructif et qui reste facile à mettre en oeuvre. Le dispositif de mesure dynamique proposé permet d'évaluer ces propriétés, notamment de calculer les tensions en tous points de la structure, y compris au milieu.

Ce dispositif pour analyser les propriétés, notamment des niveaux de tension, sur des structures souples tendues, se caractérise en ce qu'il comprend :
- une embase rigide de positionnement, en forme d'anneau, dont une face présente des moyens destinés à plaquer cette embase contre une face de la structure souple tendue à analyser ;
- un pot vibrant, relié rigidement par des bras à l'embase rigide, et alimenté par une source de courant alternatif pour émettre une vibration;
- une tige de liaison rigide, reliée à une extrémité au pot vibrant et à son autre extrémité à une ventouse destinée à plaquer cette tige contre la face de la structure souple comprise à l'intérieur de l'embase ;
- un capteur de force, monté sur la tige de liaison, destiné à transformer les vibrations émises par le pot en une force dynamique, et à émettre un signal représentatif de la force appliquée sur la structure au moyen de la ventouse ;
- un capteur de déplacements, destiné à mesurer les déplacements instantanés au centre de la structure souple comprise dans l'embase, lorsque cette structure est soumise à une force dynamique, et à émettre un signal représentatif de ce déplacement au voisinage de la ventouse ;
- une unité de traitement et de calcul, destinée:
   . à recevoir les signaux émis respectivement par le capteur de force et le capteur de déplacement en fonction de la fréquence d'excitation ;
   . à traiter ces deux signaux au moyen d'une carte d'acquisition ;
   . à calculer le rapport complexe des deux signaux en fonction de la fréquence de la vibration émise ;
   . à afficher un résultat représentatif de la propriété mesurée.

En d'autres termes, l'invention consiste à faire appel à un dispositif dont tous les éléments soient tout d'abord disposés du même côté de la structure tendue, ce qui permet ainsi d'effectuer des mesures en tous points, et d'autre part, adhérent parfaitement à la structure, et enfin par reconnaissance harmonique, permettent d'appliquer une action sinusoïdale ponctuelle, perpendiculaire au plan de la tangente de la structure en un point, puis à mesurer la réponse en déplacement en ce même point. De la sorte, le rapport complexe des deux signaux dynamiques en fonction de la fréquence d'excitation, conduit à la signature spectrale de la structure analysée. Par identification, la signature spectrale permet d'accéder non seulement aux prétentions réalisées suivant le sens chaîne ou le sens trame, mais également aux caractéristiques mécaniques anisotropiques "masses" et "amortissements". Ainsi, on peut déterminer les raideurs (ou la souplesse) suivant le sens chaîne ou le sens trame, mais également d'autres caractéristiques dynamiques auxquelles on n'avait pas accès jusqu'à ce jour tels que :
- les fréquences propres qui permettent d'accéder aux tensions ;
- les amortissement réduits suivant l'une des deux directions;
- les masses généralisées sur également ces deux directions ;
- et enfin les amortissements non diagonaux (termes de couplage entre modes).

Avantageusement, en pratique :
- l'embase rigide de positionnement est aplatie sur sa face extérieure et est destinée à venir au contact de la structure analysée, et présente sur cette face une encoche annulaire reliée à une source de vide pour plaquer la structure contre la face aplatie de cette embase ;
- l'embase a une forme générale circulaire, elliptique, carrée ou rectangulaire ; on a déterminé qu'il suffit que le diamètre de l'embase soit de l'ordre de quelques dizaines de centimètres, par exemple de l'ordre de vingt à cinquante centimètres ;
- le pot vibrant comprend un noyau excité par un champ électromagnétique, produit par un courant électrique alternatif ;
- la fréquence de vibration du pot est comprise entre 0,1 et 300 Hz (s) ; on a observé que si la fréquence était inférieure à 0,1 Hz, on ne peut mettre en évidence que la rigidité et non les autres caractéristiques ; de même si cette fréquence excède 300 Hz, l'ensemble se met à vibrer et les mesures deviennent difficiles ;
- la ventouse positionnée à l'extrémité de la tige de liaison est indéformable et est reliée à une source de vide pour faire plaquer la structure souple à analyser ; comme ventouse, on fait appel à des ventouses en élastomère dur, voire en polytétrafluoroéthylène, sans vibration dimensionnelle, pour ne pas perturber les vibrations émises ;
- le capteur de déplacements est du type sans contact ; on utilise de préférence des capteurs optiques ou à courant de foucault ;
- l'unité de traitement et de calcul permet par analyse modale de décomposer la fonction de transfert suivant les modes propres de vibration pour calculer les valeurs caractéristiques de la structure souple tendue dans deux directions orthogonales ;
- le vide appliqué dans l'embase et dans la ventouse est suffisant (de l'ordre de quelques décimètres à quelques mètres d'eau), pour appliquer fermement la toile et peut être réalisé par une pompe à vide .

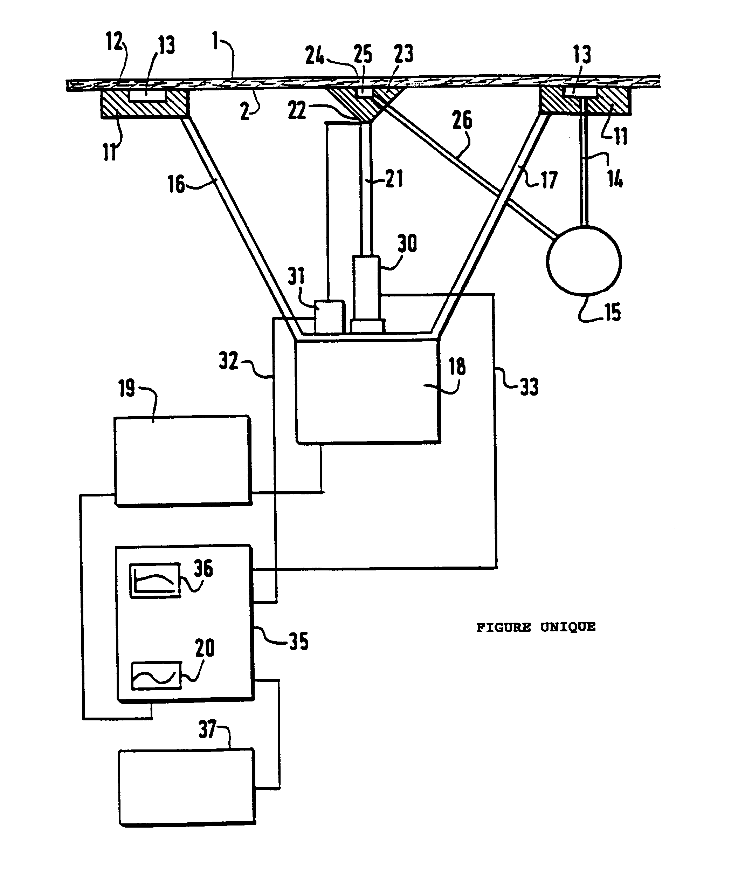

La manière dont l'invention peut être réalisée et les avantages qui en découlent ressortiront mieux de l'exemple de réalisation qui suit, à l'appui de la figure unique annexée qui est un schéma sommaire de représentation en coupe d'un dispositif conforme à l'invention.

Dans cette figure unique, la référence générale (1) désigne la structure souple tendue à analyser, telle que notamment une toile en tissu enduit pour la confection de velum, de bâches, d'abris ou structures textiles en général. Cette toile (1) peut être pré-tendue lorsque par exemple on est dans une opération de montage, voire même tendue si l'on désire effectuer un diagnostic. Comme déjà dit, ce peut être également un film ou une membrane.

Le dispositif selon l'invention désigné par la référence générale (10), comprend tout d'abord une embase (11) rigide de positionnement, en forme d'anneau, par exemple en acier ou un autre matériau approprié, et dont le diamètre est de l'ordre de quelques dizaines de centimètres, par exemple de vingt à cinquante centimètres. La forme de cet anneau fermé (11) peut être variable : circulaire, elliptique, carré, ou rectangulaire.

La face (12) de cet anneau, destinée à venir au contact de l'envers (2) de la toile tendue (1), est aplatie et présente sur toute sa surface une encoche annulaire (13) reliée par une tubulure (14) à une source de vide (15), par exemple à main ou autre, destinée à faire le vide dans l'encoche (13) et par là, à appliquer fermement la toile (1) sur l'embase annulaire (11) formant cerce. Comme déjà dit, il importe que cette embase-cerce (11) soit rigide. Par des bras rigides (16,17), l'embase est reliée à un pot vibrant (18) excité par une source de courant alternatif (19) pour émettre une vibration. Ce pot vibrant (18) électromagnétique du commerce, excité par le courant alternatif (19), émet une vibration que l'on pilote par le générateur interne (20) de l'unité de traitement (35) dans la gamme 0,1 à 300 Hz, permet donc de générer une force dynamique au moyen d'une tige de liaison rigide (21) reliée au pot (18) et plus précisément au capteur de force (30), et dont l'autre extrémité (22) est couplée à une ventouse rigide (23) dont la face extérieure (24) est aplatie, et qui présente en son centre une chambre (25) reliée par une tuyauterie (26) à la source de vide, par exemple (15).

La tige (21), et plus précisément son extrémité (24,25), sont disposées dans le même plan que la face aplatie (12) de l'embase (11), et sensiblement au centre de cette embase. Le bras rigide (21) présente un capteur de force (30) destiné à mesurer la force dynamique émise par le pot (18) et à émettre un signal représentatif de la force appliquée sur la toile au moyen et au niveau de la ventouse (23).

L'ensemble comporte également un capteur de déplacements (31), fixé par exemple sur le pot (18), destiné à mesurer les déplacements instantanés de la structure souple (1) au voisinage de la ventouse (23), du moins lorsque la toile (1) est soumise à la force dynamique transmise par la tige de liaison (21) rigide. Ce capteur de déplacements (31 ) est du type sans contact, optique ou à courant de foucault et comme déjà dit, destiné à mesurer à tout instant la distance à la toile et à mesurer les déplacements de celle-à lorsqu'elle vibre.

L'ensemble comprend également une unité de traitement et de calcul (35), destinée à recevoir les signaux (32,33) émis respectivement par le capteur de déplacements (32) et par le capteur de force (33), puis à traiter ces deux signaux au moyen d'une carte d'acquisition comportant un logiciel approprié, puis à calculer le rapport complexe des deux signaux dans l'espace des fréquences en (36), notamment lorsque l'on balaye les fréquences au moyen du générateur interne (20).

Avantageusement, l'unité de traitement calcule en fonction de la fréquence émise, le logarithme du déplacement (D) déterminé par le capteur (31) sur la force appliquée par la tige rigide (21). L'unité de calcul (36) affiche en (37) en clair un résultat représentatif des tensions mesurées sur la toile (1).

Par analyse des modes de résonance liés à la trame et à la chaîne, on peut déterminer à l'aide de l'unité de traitement (35), les caractéristiques statiques et dynamiques propres à ces deux directions (paramètres mathématiques).

L'identification des paramètres recherchés (physiques) se fait à l'aide du calculateur (37) :
- en basses fréquences, les ordonnées des deux modes donnent accès aux modules de traction en chaîne et en trame (en N/m);
- l'abscisse des pics de résonances donne accès aux tensions en chaîne et trame (N/m);
- l'ordonnée des pics de résonances est caractéristique de l'amortissement suivant les deux directions précitées ;
- les fréquences les plus élevées permettent d'accéder aux termes de masse ;
- enfin, les couplages entre modes doivent permettre d'accéder aux termes de couplage par amortissement.

Le dispositif selon l'invention étant situé du même côté, on peut donc effectuer des mesures ou des diagnostics en tous points de la toile. La mesure effectuée est dynamique et donne une excellente représentation des propriétés dans les deux directions principales sens long et travers (chaîne et trame), ce que l'on ne savait réaliser jusqu'à ce jour. La mesure est réalisée rapidement, sans faire appel à du personnel spécialisé. On peut également mesurer le comportement de l'interface entre l'enduit et le support textile, notamment dans les soudures. Enfin, les mesures réalisées n'affectent pas et ne détruisent pas la toile.

De la sorte, ce dispositif peut être utilisé avec succès partout où l'on fait appel à des structures souples tendues, notamment pour la confection d'abris, de vélum, structures textiles tendues, au moyen de toiles enduites ou analogues.

## Revendications

1/ Dispositif (10) pour analyser et mesurer les propriétés mécaniques, notamment les niveaux de tension, sur des structures souples tendues, caractérisé en ce qu'il comprend :
- une embase rigide (11) de positionnement, en forme d'anneau, dont une face présente des moyens destinés à plaquer cette embase contre une face de la structure souple tendue (1) à analyser ;
- un pot vibrant (18), relié rigidement par des bras à l'embase rigide (11), et alimenté par une source de courant alternatif (19) pour émettre une vibration ;
- une tige de liaison rigide (21), reliée à une extrémité au pot vibrant (18) et à son autre extrémité à une ventouse (23) destinée à plaquer cette tige (21) contre la face de la structure souple (1) comprise à l'intérieur de l'embase (11) ;
- un capteur de force (33), monté sur la tige de liaison (21), destiné à mesurer la force dynamique émise par le pot (18) ;
- un capteur de déplacements (31), destiné à mesurer les déplacements instantanés au centre de la structure souple (1) comprise dans l'embase (11), lorsque cette structure est soumise à une force dynamique, et à émettre un signal représentatif de ce déplacement au voisinage de la ventouse (23) ;
- une unité de traitement et de calcul (36) , destinée:
. à recevoir les signaux (32,33) émis respectivement par le capteur de force et le capteur de déplacement (31) en fonction de la fréquence d'excitation ;
. à traiter ces deux signaux (32,33) au moyen d'une carte d'acquisition;
. à calculer le rapport complexe des deux signaux (32,33) en fonction de la fréquence de la vibration émise ;
. à afficher un résultat représentatif de la propriété mesurée.

2/ Dispositif selon la revendication 1, caractérisé en ce que l'embase rigide (11) de positionnement est aplatie sur sa face extérieure destinée à venir au contact de la structure analysée (1), et présente sur cette face une encoche annulaire (13) reliée à une source de vide (15) pour plaquer la structure (1) contre la face aplatie de cette embase (11).

3/ Dispositif selon l'une des revendications 1 et 2, caractérisé en ce que l'embase (11) a une forme générale circulaire, elliptique, carrée, rectangulaire.

4/ Dispositif selon l'une des revendications 1 à 3, caractérisé en ce que le pot vibrant (18) comprend un noyau excité par un champ électromagnétique, produit par un courant électrique alternatif.

5/ Dispositif selon l'une des revendications 1 à 4, caractérisé en ce que la fréquence de vibration du pot (18) est comprise entre 0,1 et 300 Hz.

6/ Dispositif selon l'une des revendications 1 à 5, caractérisé en ce que la ventouse (23) positionnée à l'extrémité de la tige de liaison est indéformable et est reliée à une source de vide (15) pour faire plaquer la structure souple (1) à analyser.

7/ Dispositif selon l'une des revendications 1 à 6, caractérisé en ce que le capteur de déplacements (31) est du type sans contact.

8/ Dispositif selon l'une des revendications 1 à 7, caractérisé en ce que l'unité de traitement et de calcul (35) permet par analyse modale de décomposer les signaux (32,33) émis pour calculer les valeurs caractéristiques de la structure souple (1) tendue dans deux directions orthogonales.

9/ Dispositif selon l'une des revendications 1 à 8, caractérisé en ce que le vide appliqué dans l'embase (11) et dans la ventouse (23) est (de l'ordre de quelques décimètres à quelques mètres d'eau, pour appliquer fermement la toile (1).
